(19) Europäisches Patentamt
European Patent Office
Office européen des brevets

(11) **EP 1 429 264 B1**

(12) **EUROPEAN PATENT SPECIFICATION**

(45) Date of publication and mention of the grant of the patent:
**29.06.2016 Bulletin 2016/26**

(21) Application number: **03257600.1**

(22) Date of filing: **03.12.2003**

(51) Int Cl.:
*G06T 17/30* (2006.01)    *G06T 17/10* (2006.01)
*G06F 17/30* (2006.01)    *G06K 9/46* (2006.01)
*G06K 9/68* (2006.01)

(54) **Method of perceptual 3D shape description and method and apparatus for searching 3D graphics model database using the description method**

Verfahren zur perzeptuellen Beschreibung von 3D-Formen und Verfahren und Anordnung zur Recherche in einer 3D-Grafikmodelldatenbank unter Verwendung des Beschreibungsverfahrens

Procédé de description perceptuelle des formes 3D et procédé et dispositif de recherche dans une base de données de modèles graphiques 3D en utilisant du procédé de description

(84) Designated Contracting States:
**DE FR GB NL**

(30) Priority: **05.12.2002 US 430974 P**
        **14.10.2003 US 510147 P**
        **25.11.2003 KR 2003084215**

(43) Date of publication of application:
**16.06.2004 Bulletin 2004/25**

(73) Proprietors:
• **Samsung Electronics Co., Ltd.**
  **Suwon-si, Gyeonggi-do, 443-742 (KR)**
• **Seoul National University Industry Foundation**
  **Seoul 151-050 (KR)**

(72) Inventors:
• **Park, In-kyu**
  **Seoul (KR)**
• **Lee, Sang-uk**
  **Seoul (KR)**
• **Kim, Do-Kyoon**
  **Seongnam-si**
  **Gyeonggi-do (KR)**
• **Yun, Il-dong**
  **Seongnam-city**
  **Kyungki-do (KR)**
• **Kim, Duck-hoon**
  **Sindaebang 3-dong**
  **Dongjak-gu**
  **Seoul (KR)**

(74) Representative: **Greene, Simon Kenneth**
**Elkington and Fife LLP**
**Prospect House**
**8 Pembroke Road**
**Sevenoaks, Kent TN13 1XR (GB)**

(56) References cited:
• **ZAHARIA T ET AL: "3D-shape-based retrieval within the MPEG-7 framework" PROCEEDINGS OF THE SPIE - THE INTERNATIONAL SOCIETY FOR OPTICAL ENGINEERING SPIE-INT. SOC. OPT. ENG USA, vol. 4304, 2001, pages 133-145, XP002346970 ISSN: 0277-786X**
• **BISCHOFF S ET AL: "Streaming 3D geometry data over lossy communication channels" 26 August 2002 (2002-08-26), MULTIMEDIA AND EXPO, 2002. ICME '02. PROCEEDINGS. 2002 IEEE INTERNATIONAL CONFERENCE ON LAUSANNE, SWITZERLAND 26-29 AUG. 2002, PISCATAWAY, NJ, USA,IEEE, US, PAGE(S) 361-364 , XP010604381 ISBN: 0-7803-7304-9 * abstract * * figures 1,3 * * page 361, left-hand column, 2nd paragraph" ***
• **EURIPIDES G.M. PETRAKIS: "Content-Based Retrieval of Medical Images" INTERNATIONAL JOURNAL OF COMPUTER RESEARCH, vol. 11, no. 2, 30 June 2002 (2002-06-30), pages 171-182, XP008053199 Nova Science Publishers, NY, USA.**

EP 1 429 264 B1

- KENONG WU ET AL: "RECOVERING PARAMETRIC GEONS FROM MULTIVIEW RANGE DATA", PROCEEDINGS OF THE COMPUTER SOCIETY CONFERENCE ON COMPUTER VISION AND PATTERN RECOGNITION. SEATTLE, JUNE 21 - 23, 1994; [PROCEEDINGS OF THE COMPUTER SOCIETY CONFERENCE ON COMPUTER VISION AND PATTERN RECOGNITION], LOS ALAMITOS, IEEE COMP. SOC. PRESS,, 21 June 1994 (1994-06-21), pages 159-166, XP000515836, ISBN: 978-0-8186-5827-3

- DUCK HOON KIM ET AL: "Perceptual descriptor for 3D shape indexing and retrieval", 62. MPEG MEETING; 21-10-2002 - 25-10-2002; SHANGHAI; (MOTION PICTUREEXPERT GROUP OR ISO/IEC JTC1/SC29/WG11),, no. M8980, 15 October 2002 (2002-10-15), XP030037916, ISSN: 0000-0271

**Description**

The present invention relates to a 3-dimensional (3D) graphics, and more particularly to, a method of perceptual 3D shape description and a method and apparatus for searching a 3D graphics model database established using the description method to retrieve the similar models to a query model.

The number of 3D graphics objects to be managed has geometrically increased in response to the developments in 3D graphics technology and expansions in related technical fields. Therefore, there has been a need for techniques to efficiently store, manage, and reuse a number of 3D graphics objects.

According to MPEG-7, Shape3D is suggested and adopted as an international standard for 3D shape description and database searching. In general, 3D graphics models are expressed as polygonal meshes that consist of vertices and faces. Shape3D defines the shape spectrum of such polygonal meshes, which is the histogram of shape indices calculated on the whole surface of a mesh model.

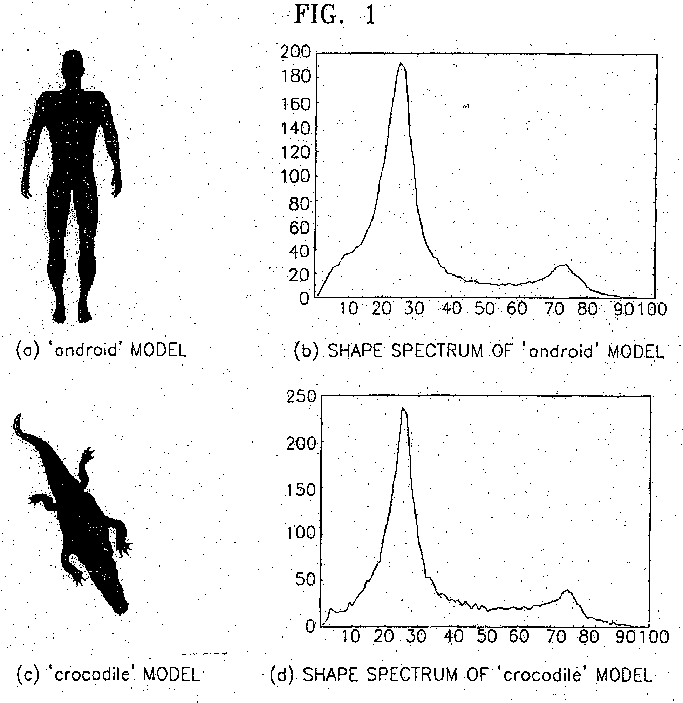

However, some problems arise with Shape3D. First, the shape spectrum represents geometrical attributes of a local surface of a 3D object and cannot provide the overall, spatial information, thereby lowering shape discriminability. FIG. 1 illustrates an example of limited shape discriminability of Shape3D. In FIG. 1, (a) and (b) denote 3D objects, and (c) and (d) show the shape spectra of the objects (a) and (b), respectively. As is apparent from (a) and (b), 'android' model and 'crocodile' model have distinct shapes. However, their shape spectra are very similar to each other as shown in (b) and (d) of FIG. 1. A quantitative difference between the shape spectra of the 'android' and 'crocodile' models is merely 0.025981. In other words, when the 'android' object is used as a query for searching, the 'crocodile' object may be undesirably retrieved as one of the most similar objects, i.e., with a high similarity rank among the searched results. The searched shape has no similarity with the actual query shape. Therefore, using Shape3D is unsuitable for searching with a query by sketch or a query by editing, since there is no coherence between the actual shape and its shape spectrum.

A 3-d representation using ellipsoids is described in "Streaming 3d geometry data over lossy communication channels", Bischoff and Kobbelt, 2002 IEEE International Conference on Multimedia and Expo, pages 361 to 364.

Attributed relational graphs are described in "Content-based retrieval of medical images", Petrakis, International Journal of Computer Based Research, volume 11, number 2, pages 171 to 182.

A polygonal-mesh based interpretation is described in "3d shape retrieval within the MPEG-7 framework", Zaharia and Preteux, Nonlinear Image Processing and Pattern Analysis XIII, Proceedings of SPIE volume 4304 (2001) pages 133 to 145.

Duck Hoon Kim et al, "Perceptual descriptor for 3D shape indexing and retrieval", 62. MPEG Meeting October 2002, Shanghai, Motion Picture Expert Group ISO/IEC JTC/SC29/WG11, M8980, 15 October 2002 ISSN 0000-0271 describes 3D object indexing and retrieval.

In one aspect of the present invention, there is provided a method of perceptual 3D shape description according to claim 1.

The present invention provides an efficient method of perceptual 3-dimensional (3D) shape description that can be applied to the management of a 3D graphics model database.

The relational attributes may include at least the distance between nodes, the angle between the first principal axes of ellipsoids, and the angle between the second principal axes of the ellipsoids. The unary attributes of the nodes may be quantized into a predetermined number of bits.

In another aspect of the present invention, there is provided a computer readable medium having a perceptual 3D shape descriptor formed by the above method.

In another aspect of the present invention, there is a provided method of searching a database of 3D graphics models described by the above method according to claim 5.

The present invention also provides a method and apparatus for searching a 3D graphics model database that is built up using the above method to retrieve the similar models to a query model.

According to specific embodiments of the searching method, the receiving of the input 3D graphics model may include a user designing and inputting a 3D graphics model by means of an interactive tool. The transforming of the received 3D graphic models into the perceptual 3D shape descriptor may include a user editing the transformed 3D shape descriptor if required.

The comparing of the perceptual 3D shape descriptor with each of the perceptual 3D shape descriptors of the 3D graphics models to retrieve the 3D graphic models may include: defining the volumes of the nodes as weights; and comparing the transformed perceptual 3D shape descriptor with each of the perceptual 3D shape descriptors of the 3D graphics models stored in the database using the Double EMD (earth mover's distance) method to retrieve the 3D graphic models similar to the perceptual 3D shape descriptor. In this case, the Double EMD method includes: generating a distance matrix between query nodes of a query graph and model nodes of a model graph (Inner EMD); and measuring the similarity between the query graph and the model graph by calculating the amount of work required to move the weight (weight transition) from the query nodes to the model nodes based on the distance matrix (Outer EMD).

The generating of the distance matrix in the Inner EMD method may include: extracting the query nodes of the query graph of the perceptual 3D shape descriptor and the model nodes of the model graph of each of the 3D graphics models stored in the database and setting combinations of a particular query node and a particular model node to be compared with each other; and generating the distance matrix by measuring the distance between the query and model-nodes of each of the combinations. The generating of the distance matrix by measuring the distance between the query and model nodes of each of the combinations may include: constructing a first distance matrix of the absolute values of differences between attribute vectors of the query and model nodes to calculate the distance between the query and model nodes of each of the combinations; constructing vector spaces with axes parameterized by relational attributes of the nodes; expressing the query nodes and the model nodes as sets of points in the respective vector spaces; setting an imaginary node in each of the vector spaces, the imaginary node being spaced an equal distance apart from all of the points; constructing a second distance matrix by calculating the Euclidian distances between the points in the vector spaces; and summing the first and second distance matrices to generate the distance matrix.

The measuring of the similarity between the query graph and the model graph in the Outer EMD method may comprise: calculating the amount of work required to move the weight (weight transition) from the query nodes to the model nodes based on the distance matrix and the weights of the query nodes and the model nodes; and calculating as the similarity a total amount of work for all of the nodes.

In another aspect of the present invention, there is provided a computer readable medium having embodied thereon a computer program for the above method of searching the perceptual 3D graphics model database.

In another aspect of the present invention, there is provided an apparatus for searching a database of 3D graphics models described by the description method, the apparatus including: a query input unit that receives a query that is a 3D graphics model; a model/shape descriptor transforming unit that transforms the 3D graphic model received as the query into a perceptual 3D shape descriptor; a matching unit that compares the perceptual 3D shape descriptor with each of the perceptual 3D shape descriptors of the 3D graphics models stored in the database to retrieve the models that are similar to the perceptual 3D shape descriptor; and a model output unit that outputs the retrieved models.

According to specific embodiments of the apparatus, the query input unit may allow a user to design and input the 3D graphics model by means of an interactive tool. The model/shape descriptor transforming unit may include a shape editor that allows a user to edit the perceptual 3D shape descriptor if required. The matching unit may include: a weight converter that defines the weights of the nodes as weights; and a model searcher that compares the perceptual 3D shape descriptor of a query model with each of the perceptual 3D shape descriptors of the 3D graphics models stored in the database using a Double EMD method to retrieve the models from the database that are similar to the perceptual 3D shape descriptor.

The above and other features and advantages of the present invention will become more apparent by describing in detail exemplary embodiments thereof with reference to the attached drawings in which:

FIG. 1 exemplarily illustrates a limited shape discriminability of Shape3D;
FIG. 2 illustrates a shape deposition algorithm applied in the present invention;
FIG. 3 illustrates an example of generating a part-based representation for a 'cow' model;
FIG. 4 is a flowchart of a method of perceptual 3D shape description according to an embodiment of the present invention;
FIG. 5 illustrates edge attributes that define the relational attributes between two nodes of a perceptual 3D shape (P3DS) descriptor;
FIG. 6 is a table of binary representation form for the P3DS descriptor;
FIG. 7 is a block diagram of an apparatus for searching a database of 3D graphics models according to an embodiment of the present invention;
FIG. 8 is a flowchart of searching a 3D model database in the apparatus of FIG. 7 according to the present invention;
FIG. 9 is a flowchart of calculating the similarity between query and model graphs;
FIG. 10 illustrates vector spaces for calculating inner earth mover's distances (EMDs) and the relational attributes between nodes in the vector spaces;
FIG. 11 illustrates an example of a distance matrix constructed from the vector spaces of FIG. 10;
FIG. 12 illustrates an example of using a sketched query in a search system and the searched result;
FIG. 13 illustrates original 3D mesh object models and their P3DS descriptors expressed as attributed relational graphs (ARGs);
FIG. 14 illustrates an example of generating P3DS descriptors for differently sized 'triceratops' modes;
FIG. 15 illustrates examples of P3DS descriptors for 'triceratops' models one of which contains noise and the other is transformed; and
FIG. 16 comparatively illustrates the database search performance between the P3DS descriptor according to the present invention and a conventional Shape3D descriptor, which was measured by Bull's eye performance (BEP) and average normalized marching retrieval rate (ANMRR).

In an efficient method of 3-dimensional (3D) shape description according to the present invention, which can be applied to the management of a 3D graphics model database, a 3D object is transformed into a part-based representation and then an attributed relational graph (ARG) that consists of nodes and edges. This description method is very similar to the human visual perception mechanism and thus is called a 'perceptual 3D shape descriptor'.

The generation of the perceptual shape descriptor will now be described. The part-based representation of 3D shapes enable perceptual recognition of an object and is independent of rotation, translation, inhomogeneous scaling, transformation, partial deletion, etc. This part-based representation is applied to an intermediate step for high-quality 3D object shape representation. Various conventional algorithms developed so far may be categorized roughly into morphology-based decomposition and skeleton-based decomposition.

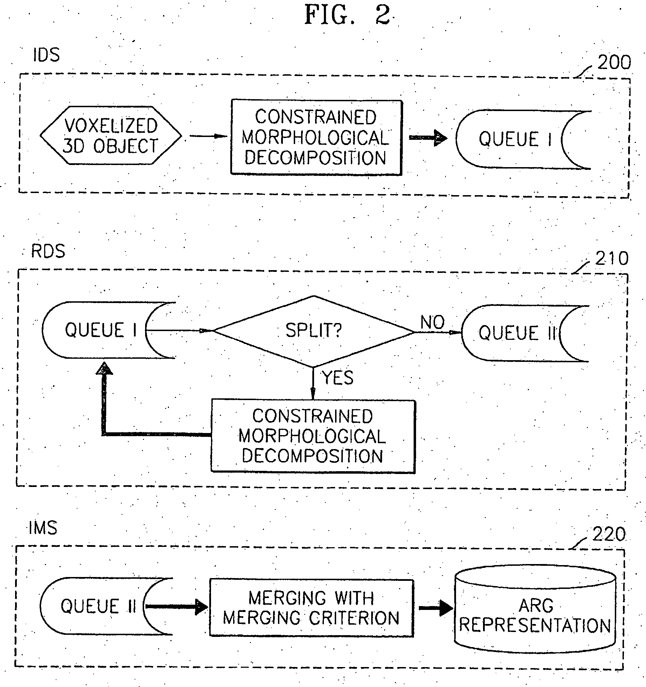

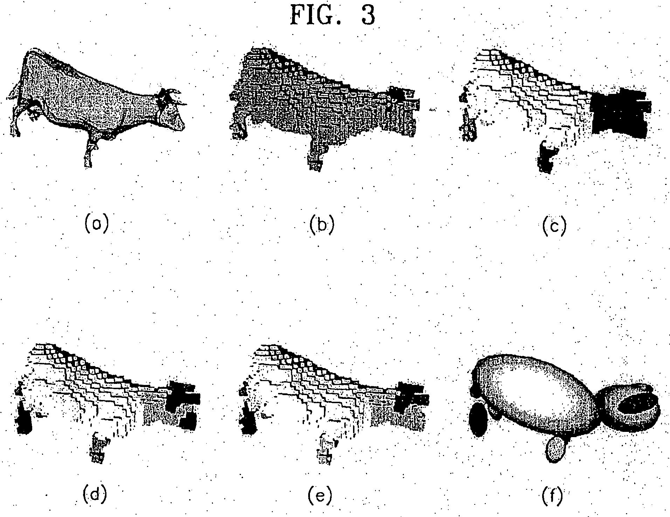

According to the present invention, a new algorithm is utilized to decompose the shape of a 3D object into parts. This decomposition algorithm involves recursively performing constrained morphological decomposition (CMD) using calculated mathematical morphology and weighted convexity. Next, it is determined whether to merge decomposed adjacent parts based on a weighted convexity difference (WCD). As such, the shape of the 3D object can be more adaptively and simply represented using the decomposition algorithm. The decomposition algorithm includes three stages as illustrated in FIG. 2. In FIG. 2, the arrows indicate the processing flow of binary images. A recursive decomposition stage (RDS) 210 follows an initial decomposition stage (IDS) 200 and is continued until QUEUE I is empty. Next, an iterative merging stage (IMS) 220 is performed on the decomposed parts that remain in QUEUE II for simpler, higher-quality representation. FIG. 3 illustrates step by step an example of part-based representation for a "cow" model. In FIG. 3, (a) and (b) are meshed and voxel representations of the cow model, respectively, (c), (d), and (e) show the results of the IDS, RDS, and IMS, respectively, and (f) is a finally generated attributed relational graph (ARG) for the cow model, in which ellipsoidal nodes and edges that connect the nodes approximate corresponding decomposed parts.

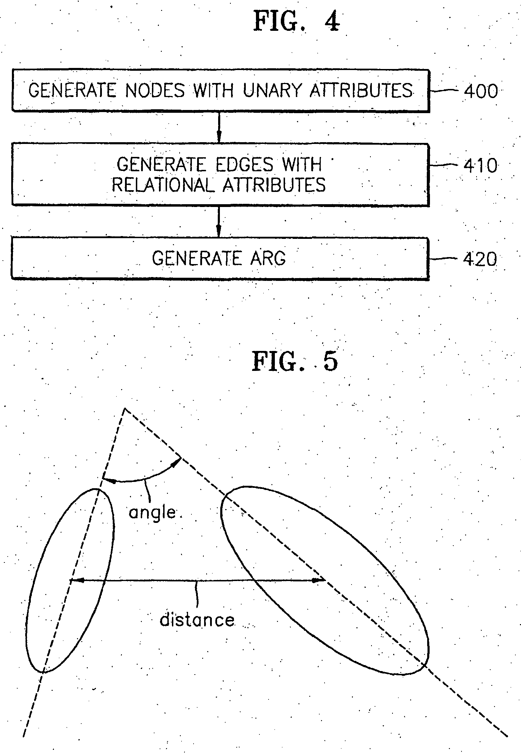

FIG. 4 is a flowchart of a method of perceptual 3D shape description according to an embodiment of the present invention. The method roughly includes generating nodes (step 400), generating edges (step 410), and generating an ARG (step 420). In step 400, nodes that correspond to the parts of a 3D shape model in a part-based representation, respectively, and include unary attributes of the corresponding parts are generated. In step 410, edges that define relational attributes between the nodes are generated. In step 420, an ARG that consists of the nodes and the edges is represented. In particular, the perceptual 3D shape description for a given 3D model is achieved based on the above-described part-based representation. The perceptual 3D shape descriptor is represented as an ARG that consists of node and edges. The nodes of the ARG represent the decomposed parts of the 3D model and the unary attributes of the parts, and the edges represent the relational attributes between the nodes. In an embodiments according to the present, the perceptual 3D shape descriptor utilizes four unary attributes and three relational attributes that are derived from the geometric relation between the principal axes of connected nodes.

In detail, a node is represented as an ellipsoid parameterized by a volume v, a convexity c, and eccentricities e1 and e2. The convexity c is defined as the ratio of volume to convex hull of the node. When the variances of the node on first, second, and third principle axes are denoted by a, b, and c, respectively, where $a \geq b \geq c$, the eccentricities e1 and e2 are expressed as in equations (1) and (2) below.

$$e_1 = \sqrt{1 - c^2 / a^2} \qquad \qquad \dots (1)$$

$$e_2 = \sqrt{1 - c^2 / b^2} \qquad \qquad \dots (2)$$

FIG. 5 illustrates edge attributes that define the relational attributes between two nodes of the perceptual shape descriptor. These edge attributes are extracted based on the geometric relation between the two ellipsoids in FIG. 5. In particular, the distance between the centers of the two ellipsoids, the angle between the first principal axes of the ellipsoids, and the angle between the second principal axes of the ellipsoids, are utilized as the edge attributes. In addition, the unary attributes of the respective nodes and the relational attributes in the edges are normalized to be within the range of from 0 to 1.

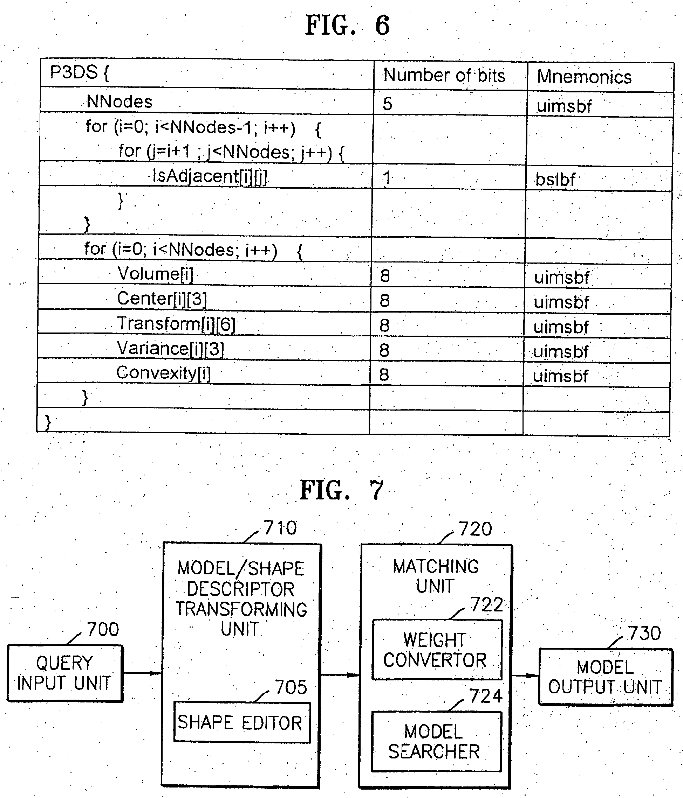

FIG. 6 is a table of binary representation form for the perceptual 3D shape (P3DS) descriptor. In FIG. 6, volume, center, partial transform in an object-oriented coordinate system, variance on each principal axis, and convexity form unary node attributes. The variance implies the degree of distribution of voxels that form an ellipsoid on each 3D principal axis. In this embodiment, the maximum number of nodes (Nnodes) that the P3DS descriptor can have was set to 32. In order to reduce the capacity of a memory to store the P3DS descriptor, each of the unary attributes was quantized into a predetermined number of bits, preferably 8 bits. With the assumption that all attributes are quantized into 8 bits as in the example of FIG. 6 and the P3DS descriptor has 5 nodes, the P3DS descriptor has a size of only 72 bytes. Alternatively, different numbers of quantization bits may be assigned to attributes. The data of a 3D shape described by the perceptual 3D shape description method according to the present invention may be recorded in a computer readable medium.

A method and apparatus for searching a 3D graphics model database according to the present invention will now be described. The 3D graphics model database stores 3D graphics models described using the above P3DS descriptor.

FIG. 7 is a block diagram of an apparatus for searching a database of 3D graphics models according to an embodiment of the present invention. The apparatus of FIG. 7 includes a query input unit 700, a model/shape descriptor transforming unit 710, a matching unit 720, and a model output unit 730.

The query input unit 700 receives a query that is a 3D graphics model. A user may design and input a 3D graphics model by means of an interactive tool. The model/shape descriptor transforming unit 710 transforms the 3D graphics model input as the query into the P3DS descriptor. The model/shape descriptor transforming unit 710 may include a shape editor 705 to allow the user to edit the transformed shape descriptor if necessary.

The matching unit 720 compares the transformed P3DS descriptor with each perceptual 3D shape descriptors of the 3D graphics model stored in the database to find the similar models to the transformed P3DS descriptor. The matching unit 720 includes a weight converter 722 and a model searcher 724. The weight converter 722 defines the volumes of nodes as weights. The model searcher 724 compares the transformed P3SD descriptor with each of the perceptual 3D graphics models in the database using a double earth mover's distance (EMD) method to find the similar model to the transformed perceptual 3D shape descriptor. The model output unit 730 outputs the searched similar models.

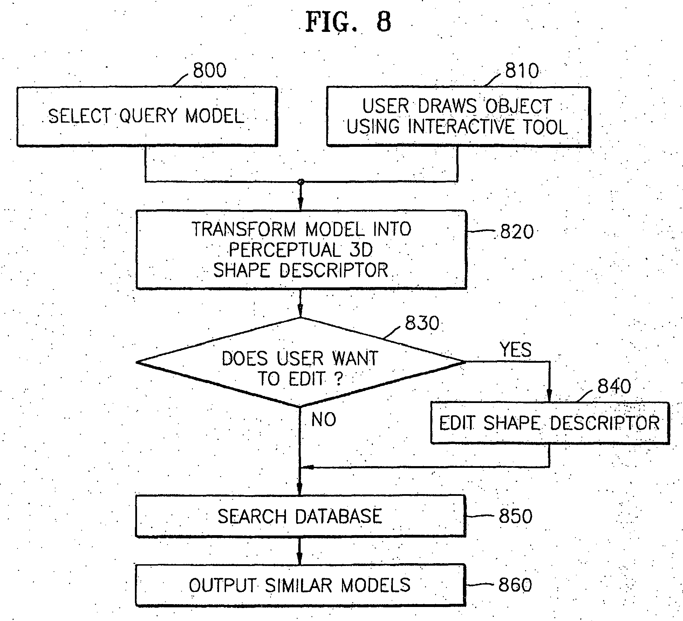

A method of searching a 3D model database in the above apparatus will now be described. FIG. 8 is a flowchart of searching a 3D model database in the above apparatus according to the present invention.

First, a query 3D graphics model is received (step 800). Alternatively, a user may draw and input a 3D graphics model as a query by means of an interactive tool (step 810). The 3D graphics model is transformed into the P3DS descriptor (step 820). If the user wants to edit the transformed P3DS descriptor (step 830), the transformed P3DS descriptor may be edited (step 840).

Next, the transformed P3DS descriptor is compared with each of the perceptual 3D shape descriptors of the 3D graphics models stored in the database to find similar models (step 850). The found similar models are output (step 860).

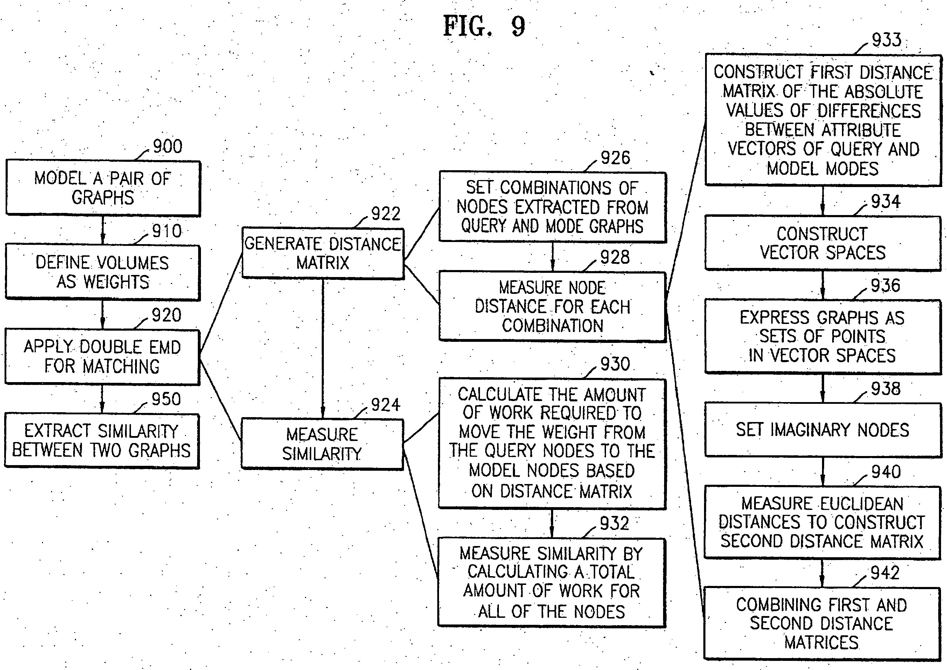

A process of searching the database will be described in detail with reference to FIG. 9, which is a flowchart of calculating the similarity between the query and model graphs.

Step 850 of searching the database for the similar models includes receiving a pair of graphs (step 900), defining the volumes of the nodes as weights (step 910), comparing the transformed P3DS descriptor with each of the perceptual graphics models using the double EMD method (step 920), and finding the models that are similar to the transformed P3DS descriptor (step 930).

Step 920 of the comparison using the double EMD method includes an inner EMD step of generating a distance matrix of the distances between query nodes of the query graph and model nodes of the model graph (step 922) and an outer EMD step of measuring the similarity between the query and model graphs based on the node attributes in the distant matrix (step 924).

The inner EMD step 922 includes extracting the query nodes of the query graph of the P3DS descriptor and the model nodes of the model graph of each of the perceptual 3D.shape descriptors of the 3D graphics models stored in the database, setting combinations of the query and model nodes to be compared with each other (step 926), and measuring the Euclidian distance for each of the combinations to generate the distance matrix (step 928).

Step 928 of generating the distance matrix includes constructing a first distance matrix of the absolute values of differences between attribute vectors of the query and model nodes (step 933), constructing vector spaces with axes parameterized by relational attributes that are defined by the edge attributes of each of the graphs (step 934), expressing the query nodes and model nodes as respective sets of points in the vector spaces (step 936), designating an imaginary node in each of the vector spaces that is spaced the same distance apart from each of the points (step 938), calculating the Euclidian distances in the vector spaces to construct a second distance matrix (step 940), and combining the first and second distance matrices into one distance matrix (step 942).

Step 924 performed using the outer EMD includes calculating the amount of work required to transform the query graph into the model graph for each of the nodes based on the distance matrix and the weights of the nodes (step 930) and measuring the similarity between the query and model graphs by calculating a total amount of work for all of the nodes (step 932).

The double EMD method used to match the query graph with a model graph stored in the database will now be described in detail. General graph matching techniques involve three steps. The first step is to construct a distance matrix between the query nodes of the query graph and the model nodes of the model graph based on the difference in unary attribute or relational attribute between each pair of the query and model nodes. The second step is to establish the correspondence between the query and model nodes based on the distance matrix constructed in the first step. If a one-to-one mapping relation is established in the second step, generally, a bipartite matching technique is used. The last step is to extract the dissimilarity between the query and model graphs based on the difference between the corresponding query and model nodes.

Various algorithms that can be applied individually or cooperatively to each of the above steps have been developed so far. However, in order to raise the matching performance of the P3DS descriptor and use it in an actual search system, there is a need to establish a many-to-many mapping relation between the query and model nodes in the second step. In view of many-to-many mapping, more accurate matching and retrieval can be achieved when the numbers of nodes and edges are different between the query and mode graphs. The EMD method is a very useful algorithm for many-to-many mapping between the query and model nodes.

The volume, which is one of the unary attributes of the nodes, is defined as a weight in order to determine the dissimilarity between the query and model graphs using an EMD. The distance matrix that defines the correspondence of the query and model nodes is constructed using another EMD. The former EMD used to determine the dissimilarity between the query and model graphs is referred to as an outer EMD, and the latter EMD used to construct the distance matrix is referred to as an inner EMD. This matching technique involving the two steps conducted using the above EMDs is referred to as a double EMD method. A process of measuring the similarity between the query and model graphs using the double EMD method is as follows.

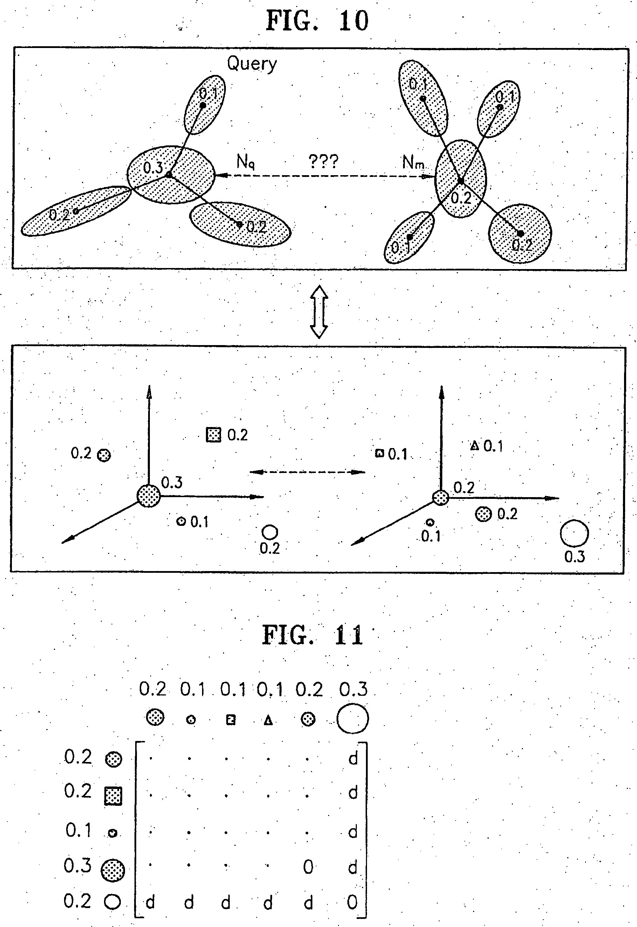

The inner EMD is defined as follows. The distance between an arbitrary query node Nq (see FIG. 10) of a query graph and an arbitrary model node $N_m$ of the model graph is calculated as the sum of two different distances. Initially, a distance matrix is constructed of the absolute values of differences between attribute vectors of the query and mode nodes to calculate the similarity between the graphs from the node attributes. Next, vector spaces with axes parameterized by relational attributes that are defined by the edge attributes of the nodes of the corresponding graphs are constructed in order to calculate the similarity between the graphs from the edge attributes. In FIG. 10, the three axes of the coordinate system in Fig. 10 are parameterized by one distances and two angles, which belong to the relational attributes of the nodes. The arbitrary query node Nq and query nodes that are connected to the arbitrary query node $N_q$ are expressed as a set of points in one of the vector spaces, and the arbitrary model node $N_m$ and model nodes that are connected to the arbitrary model node $N_m$ are expressed as a set of points in the other vector space. The arbitrary query node $N_q$ and model node $N_m$ are located at the origins of the vector spaces, respectively. An imaginary node that is spaced a constant distance d apart from the other connected nodes is set in each of the vector spaces, as denoted by blank circles in FIG. 10. This is for obtaining the sum of weights in each of the vector spaces that is equal to 1 and for preventing weight transition to nodes that are disconnected to the arbitrary query node (Nq) or model node ($N_m$) and do not appear in FIG. 10. In other words, for two objects to be compared that have similar connection structures but have greatly different volumes, the similarity between the objects is intentionally reduced. The distance matrix as shown in FIG. 11 is comprised of the Euclidian distances defined in the vector spaces. The distance between the arbitrary query and model nodes $N_q$ and $N_m$ can be calculated based on the weights of the nodes in FIG. 10 and the distance matrix of FIG. 11.

After calculating the inner EMD for all of the nodes in the query and model graphs, the amount of work required to move the weight (weight transition) from the query nodes to the model nodes based on the distance matrix is calculated. The dissimilarity between the query and model graphs is defined as a total amount of work for all of the nodes.

Functions of the P3DS descriptor used in the present invention to retrieve the similar 3D models from a database are superior to conventional methods. The most significant feature of the P3DS descriptor used in the present invention lies in that it perfectly matches the human shape cognition mechanism. Accordingly, it is possible to describe the topological shapes of 3D models using the P3DS descriptor according to the present invention and obtain proper search results. For example, if the P3DS descriptor contains information on an object that is comprised of 6 parts, for example, including a part for head, four parts for legs, and a part for tail, the object described by the P3DS descriptor may be recognized as having an animal shape and animal shapes may be retrieved from a database.

The human readability of the P3DS descriptor enables various types of shape search based on, for example, a query by sketch, a query by editing, etc. In part-based representation that is easy to build up and edit, it is allowed for a user to construct a query with more ease by expressing parts as spheres, ellipsoids, boxes, cylinders, etc, and establishing their connection relation. This constructed query is directly transformed into a P3DS descriptor and transferred to a search engine. Alternatively, the P3DS descriptor may be edited by the user in an interactive manner and applied to another type of search.

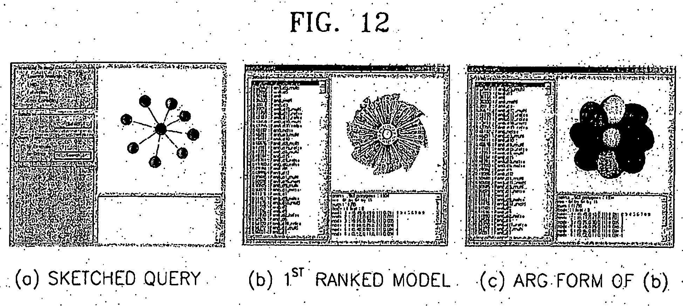

FIG. 12 shows an example of a search system that utilizes sketched queries, in which (a) shows a sketched query, (b) shows the results of a retrieval that include the most similar, 1st ranked model, and (c) shows the ARG form of the retrieved model in (b). Although not illustrated, other retrieval results with higher similarities had similar structures to (b) of FIG. 12. The user may sketch a simple topological structure by clicking on the positions of desired nodes with a mouse. The example of FIG. 12 confirms the usefulness and feasibility of the P3DS descriptor that allows the use of a sketched query.

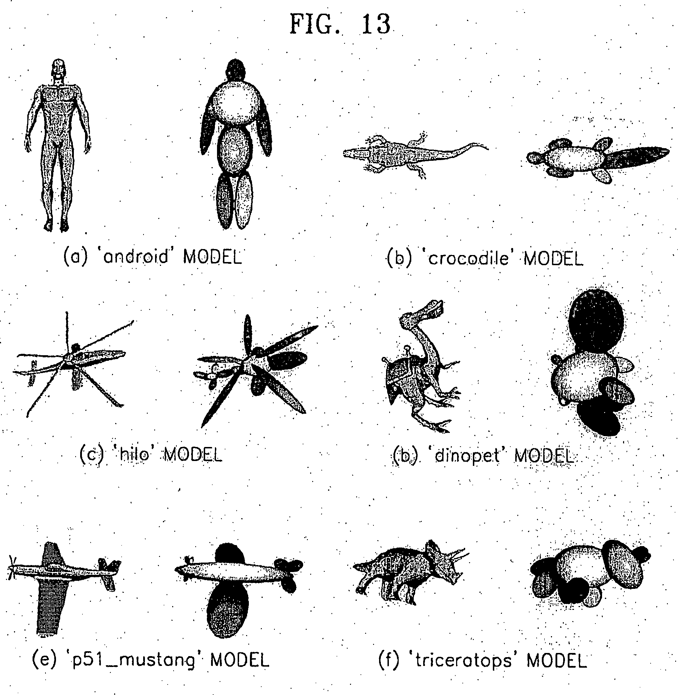

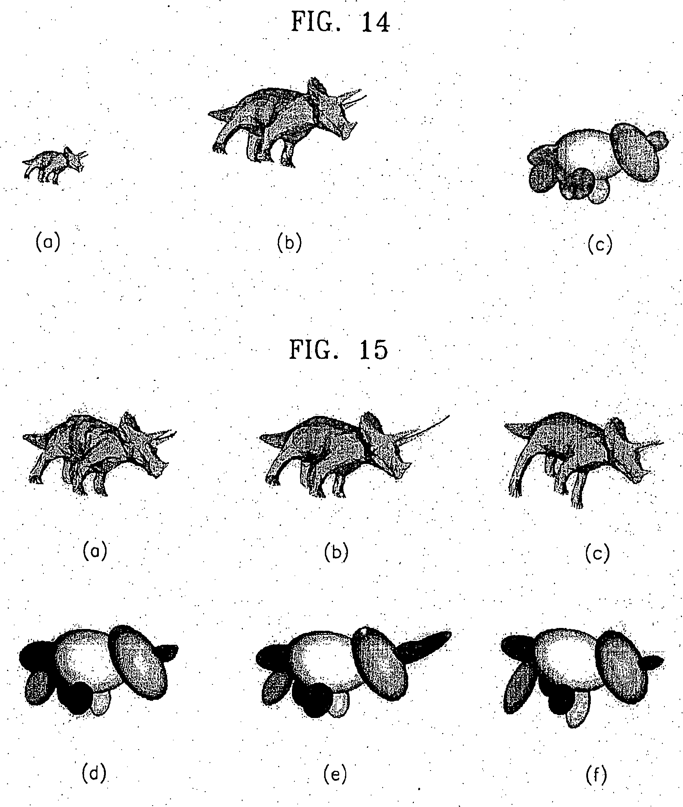

The results of a simulation test performed on the perceptual 3D shape descriptor according to the present inventions are as follows. In the simulation test, P3DS descriptors were generated. FIG. 13 shows original 3D mesh object models and their P3DS descriptors expressed in ARG forms. As is apparent from FIG. 13, there are perceptual coherence between the mesh models and P3DS descriptors. In other words, a man or a helicopter can be accurately perceived from their P3DS descriptors. In FIG. 14, (a) and (b) are enlarged and reduced versions of the 3D object (f) in FIG. 13, respectively. However, they are expressed as the same P3DS descriptor shown in (c) of FIG. 14, independent of their sizes. Fig. 15 shows examples of P3DS descriptors when an object includes a noise component and is transformed. The object in (a) of FIG. 15 has a noise-containing vertex compared to the original 3D object in (f) of FIG. 13, the object in (b) of FIG. 15 has a longer horn than the original 3D object, and the object in (c) of FIG. 15 has longer legs than the original 3D object. As can be observed from (d), (e), and (f) of FIG. 15, the generated P3DS descriptors reflect the transformations from the original object well such a degree that the original object can be analogized from the P3DS descriptors. The above results of the simulation test indicate that the P3DS descriptor according to the present invention can accurately describe the shape of a 3D object independent of size variation, noise, and transformation and is perceptually coherent with the original object. In addition, the ARG representation of the P3DS descriptor can be utilized to search a 3D model database and provide searched results that coincide with the human visual perception mechanism.

A method of searching a P3DS model database according to the present invention will now be described. In order to evaluate the database search performance of the P3DS descriptor, a database search test was conducted using a database that is currently used by MEPG-7. The database used included 3,903 3D graphics models categorized in a 4-hierarchical structure that includes 8 top categories and 102 leaf categories. Bull's eye performance (BEP) and average normalized marching retrieval rate (ANMRR) used by MPEG-7 were applied as performance evaluation measures. A leaf category which a query model belongs to was used as a true value. A higher BEP score and a lower ANMPP score mean a more effective performance.

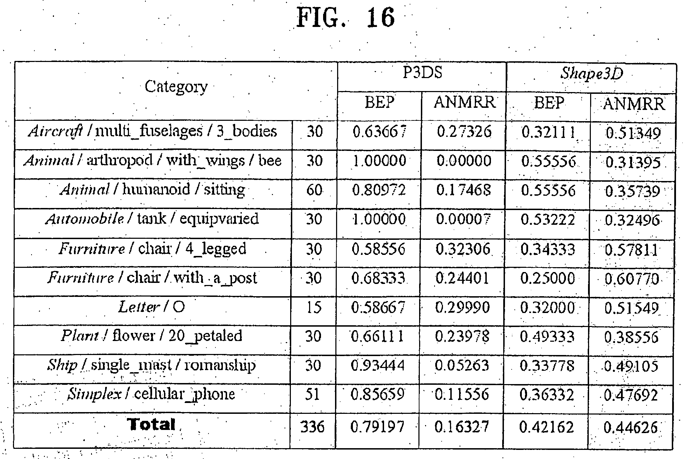

FIG. 16 comparatively shows the search performance between the P3DS descriptor according to the present invention and a conventional Shape3D descriptor for a set of 366 query models. The query models used belong to 10 selected leaf categories. As is apparent from FIG. 16, the performance of the P3DS descriptor according to the present invention as measured by BEP and ANMRR are excellent absolutely and over the conventional Shape3D descriptor.

As described above, a method of P3DS description according to the present invention enables a user to use a query by sketch or editing over conventional methods. This advantage of the present invention is very important in connection with contents-based database searching.

In addition, according to the present invention, a double EMD technique is applied to the matching of query and model representations so that a model graph similar to a query graph can be retrieved more accurately from a database.

Furthermore, according to the present invention, both geometric information and topological information are utilized, and the performance of the search system can be improved through many-to-many mapping of nodes between query and model graphs.

The invention may be embodied in a general purpose digital computer by running a program from a computer readable medium, including but not limited to storage media such as magnetic storage media (e.g., ROM's, floppy disks, hard disks, etc.), optically readable media (e.g., CD-ROMs, DVDs, etc.) and carrier waves (e.g., transmissions over the Internet).

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A method of perceptual 3-dimensional (3D) shape description, the method comprising:

   generating (400) nodes, each node representing an ellipsoid, that respectively correspond to parts of a representation of a 3D shape model, the nodes including unary attributes of the parts;
   wherein the ellipsoid is parameterized by a volume, a convexity, and eccentricities;
   further comprising generating (410) edges that include relational attributes between the nodes; and
   generating (420) an attributed relational graph of the 3D shape model that is comprised of the nodes and the edges;
   **characterised in that** the unary attributes of each of the nodes comprise variances that correspond to the degrees of distribution of voxels approximated by the ellipsoid on 3D principal axes, the origin of the ellipsoid, and the transformation of the node in an object-oriented coordinate system.

2. The method of claim 1, wherein the relational attributes comprise at least the distance between the centers of the ellipsoids, the angle between the first principal axes of ellipsoids, and the angle between the second principal axes of the ellipsoids.

**3.** The method of any preceding claim, wherein the unary attributes of the nodes are quantized by a predetermined number of bits.

**4.** A computer readable medium storing a perceptual 3-dimensional (3D) shape descriptor formed by the method according to any one of claims 1 through 3.

**5.** A method of searching a database of 3-dimensional (3D) graphics models described by the method of any one of claims 1 through 4, the method comprising:

receiving a query 3D graphics model;
transforming (820) the received 3D graphics model into a perceptual 3D shape descriptor in the form of the attributed relational graph comprising the nodes and the edges, the nodes each represented by an ellipsoid parameterized by a volume, a convexity and eccentricities; and
comparing (850) the perceptual 3D shape descriptor with each of the perceptual 3D shape descriptors of the 3D graphics models stored in the database to retrieve the 3D graphic models that are similar to the perceptual 3D shape descriptor.

**6.** The method of claim 5, wherein the receiving of the query 3D graphics model comprises a user designing and inputting (810) a 3D graphics model by means of an interactive tool.

**7.** The method of claim 5 or 6, wherein the transforming (820) of the received 3D graphic models into the perceptual 3D shape descriptor comprises a user editing the transformed 3D shape descriptor.

**8.** The method of any of claims 5 to 7, wherein the comparing of the perceptual 3D shape descriptor with each of the perceptual 3D shape descriptors of the 3D graphics models to retrieve the 3D graphic model comprises:

defining the volumes (910) of the nodes as weights; and
comparing (920) the transformed perceptual 3D shape descriptor with each of the perceptual 3D shape descriptors of the 3D graphics models stored in the database using a double earth mover's distance method to retrieve the 3D graphic models similar to the perceptual 3D shape descriptor,
wherein the double earth mover's distance method comprises:

generating (922) a distance matrix between query nodes of a query graph and model nodes of a model graph; and
measuring (924) the similarity between the query graph and the model graph by calculating the amount of work required to move the weight from the query nodes to the model nodes based on the distance matrix.

**9.** The method of claim 8, wherein the generating of the distance matrix comprises:

extracting (926) the query nodes of the query graph of the perceptual 3D shape descriptor and the model nodes of the model graph of each of the 3D graphic models stored in the database and setting combinations of the query and model nodes to be compared with each other; and
generating the distance matrix by measuring (928) the distance between the query and model nodes of each of the combinations.

**10.** The method of claim 9, wherein the generating of the distance matrix by measuring the distance between the query and model nodes of each of the combinations comprises:

constructing (933) a first distance matrix of the absolute values of differences between attribute vectors of the query and model nodes to calculate the distance between the query and model nodes of each of the combinations;
constructing (934) vector spaces with axes parameterized by relational attributes of the nodes;
expressing (936) the query nodes and the model nodes as sets of points in the respective vector spaces;
setting (938) an imaginary node in each of the vector spaces, the imaginary node being spaced an equal distance apart from all of the points;
constructing (940) a second distance matrix by calculating the Euclidian distances between the points in the vector spaces; and
summing (924) the first and second distance matrices to generate the distance matrix.

11. The method of claim 8, 9 or 10, wherein the measuring of the similarity between the query graph and the model graph comprises:

calculating (930) the amount of work required to move the weight from the query nodes to the model nodes based on the distance matrix and the weights of the query nodes of the query graph and the model nodes of the model graphs; and
calculating (932) as the similarity a total amount of work for all of the nodes.

12. A computer readable medium having embodied thereon a computer program for the method according to any one of claims 5 through 11.

13. An apparatus for searching a database of 3-dimensional (3D) graphics models described by the method of any one of claims 1 through 4, the apparatus comprising:

a query input unit (700) arranged to receive a query that is a 3D graphics model;
a model/shape descriptor transforming unit (710) arranged to transform the 3D graphic model received as the query into a perceptual 3D shape descriptor in the form of the attributed relational graph comprising the nodes and the edges, the nodes each represented by an ellipsoid parameterized by a volume, a convexity and eccentricities;
a matching unit (720) arranged to compare the perceptual 3D shape descriptor with each of the perceptual 3D shape descriptors of the 3D graphics models stored in the database to retrieve the models that are similar to the perceptual 3D shape descriptor; and
a model output unit (730) arranged to output the retrieved model.

14. The apparatus of claim 13, wherein the query input unit (700) allows a user to design and input the 3D graphics model by means of an interactive tool.

15. The apparatus of claim 13 or 14, wherein the model/shape descriptor transforming unit (710) comprises a shape editor that allows a user to edit the perceptual 3D shape descriptor.

16. The apparatus of claim 13, 14 or 15, wherein the matching unit (700) comprises:

a weight converter arranged to define the weights of the nodes as weights; and
a model searcher arranged to compare the perceptual 3D shape descriptor with each of the perceptual 3D shape descriptors of the 3D graphics models stored in the database using a double earth mover's distance method to retrieve the models from the database that are similar to the perceptual 3D shape descriptor, wherein the double earth mover's distance method comprises:

generating a distance matrix between query nodes of a query graph and model nodes of a model graph; and
measuring the similarity between the query graph and the model graph by calculating the amount of work required to transform the query graph to the model graph based on the distance matrix.

17. The apparatus of claim 16, wherein the generating of the distance matrix comprises:

extracting the query nodes of the query graph of the perceptual 3D shape descriptor and the model nodes of the model graph of each of the perceptual 3D shape descriptors of the 3D graphics models stored in the database to set combinations of the query and model nodes to be compared with each other; and
constructing a first distance matrix of the absolute values of differences between attribute vectors of the query and model nodes to calculate the distance between the query and model nodes of each of the combinations;
constructing vector spaces with axes parameterized by relational attributes of the nodes;
expressing the query nodes and the model nodes as sets of points in the respective vector spaces;
setting an imaginary node in each of the vector spaces, the imaginary node being spaced an equal distance apart from all of the points;
constructing a second distance matrix by calculating the Euclidian distances between the points in the vector spaces; and
combining the first and second distance matrices to generate the distance matrix, and
the measuring of the similarity between the query graph and the model graph comprises:

calculating the amount of work required to transform the query graph to the model graph for each of the nodes based on the distance matrix and the weights of the query nodes of the query graph and the model nodes of the model graphs; and

calculating as the similarity a total amount of work for all of the nodes.

**Patentansprüche**

1.  Verfahren zur perzeptuellen Beschreibung einer dreidimensionalen (3D) Form, wobei das Verfahren folgendes umfasst:

    Erzeugen (400) von Knoten, wobei jeder Knoten ein Ellipsoid darstellt, das entsprechend Teilen einer Darstellung eines 3D-Formenmodells entspricht, wobei die Knoten monadische Attribute der Teile aufweisen;
    wobei das Ellipsoid parameterisiert ist durch ein Volumen, eine Konvexität und Exzentrizitäten;
    ferner umfassend das Erzeugen (410) von Kanten, welche relationale Attribute zwischen den Knoten aufweisen; und
    Erzeugen (420) eines zugeordneten relationalen Graphen des 3D-Formenmodells, welcher die Knoten und die Kanten umfasst;
    **dadurch gekennzeichnet, dass** die monadischen Attribute jedes der Knoten Varianzen umfassen, welche den Verteilungsgraden von Voxeln entsprechen, approximiert durch das Ellipsoid auf 3D-Hauptachsen, den Ursprung des Ellipsoids und die Transformation des Knotens in einem objektorientierten Koordinatensystem.

2.  Verfahren nach Anspruch 1, wobei die relationalen Attribute wenigstens den Abstand zwischen den Mitten der Ellipsoide, den Winkel zwischen den ersten Hauptachsen der Ellipsoide und den Winkel zwischen den zweiten Hauptachsen der Ellipsoide umfassen.

3.  Verfahren nach einem der vorstehenden Ansprüche, wobei die monadischen Attribute der Knoten durch eine vorbestimmte Anzahl von Bits quantifiziert sind.

4.  Computerlesbares Medium, das einen perzeptuellen dreidimensionalen (3D) Formendeskriptor speichert, der gebildet ist durch das Verfahren nach einem der Ansprüche 1 bis 3.

5.  Verfahren zum Suchen in einer Datenbank dreidimensionaler (3D) Grafikmodelle, die durch das Verfahren nach einem der Ansprüche 1 bis 4 beschrieben sind, wobei das Verfahren folgendes umfasst:

    Empfangen eines Abfrage-3D-Grafikmodells;
    Umwandeln (820) des empfangenen 3D-Grafikmodells in einen perzeptuellen 3D-Formendeskriptor in Form des zugeordneten relationalen Graphen, der die Knoten und die Kanten umfasst, wobei die Knoten jeweils durch ein Ellipsoid dargestellt sind, das parameterisiert ist durch ein Volumen, eine Konvexität und Exzentrizitäten; und
    Vergleichen (850) des perzeptuellen 3D-Formendeskriptors mit jedem der perzeptuellen 3D-Formendeskriptoren der in der Datenbank gespeicherten 3D-Grafikmodelle, um die 3D-Grafikmodelle abzurufen, die dem perzeptuellen 3D-Formendeskriptor ähnlich sind.

6.  Verfahren nach Anspruch 5, wobei das Empfangen des Abfrage-3D-Grafikmodells es umfasst, dass ein Benutzer mittels einem interaktiven Tool ein 3D-Grafik-Modell gestaltet und eingibt.

7.  Verfahren nach Anspruch 5 oder 6, wobei das Umwandeln (820) der empfangenen 3D-Grafikmodelle in den perzeptuellen 3D-Formendeskriptor es umfasst, dass ein Benutzer den umgewandelten 3D-Formendeskriptor bearbeitet.

8.  Verfahren nach einem der Ansprüche 5 bis 7, wobei das Vergleichen des perzeptuellen 3D-Formendeskriptors mit jedem der perzeptuellen 3D-Formendeskriptoren des 3D-Grafikmodells, um das 3D-Grafikmodell abzurufen, folgendes umfasst:

    Definieren der Volumen (910) der Knoten als Gewichtungen; und
    Vergleichen (920) des umgewandelten perzeptuellen 3D-Formendeskriptors mit jedem der perzeptuellen 3D-Formendeskriptoren der in der Datenbank gespeicherten 3D-Grafikmodelle unter Verwendung einer Double Earth Mover's Distance-Methode für den Abruf der 3D-Grafikmodelle, die dem perzeptuellen 3D-Formendeskriptor ähnlich sind;
wobei die Double Earth Mover's Distance-Methode folgendes umfasst:

Erzeugen (922) einer Abstandsmatrix zwischen Abfrageknoten eines Abfragegraphen und Modellknoten eines Modellgraphen; und
Messen (924) der Übereinstimmung zwischen dem Abfragegraphen und dem Modellgraphen durch Berechnen der erforderlichen Arbeitsmenge, um die Gewichtung auf der Basis der Abstandsmatrix von den Abfrageknoten zu den Modellknoten zu bewegen.

9. Verfahren nach Anspruch 8, wobei das Erzeugen der Abstandsmatrix folgendes umfasst:

Extrahieren (926) der Abfrageknoten des Abfragegraphen des perzeptuellen 3D-Formendeskriptors und der Modellknoten des Modellgraphen jedes der in der Datenbank gespeicherten 3D-Grafikmodelle und Festlegen von Kombinationen der miteinander zu vergleichenden Abfrage- und Modellknoten; und
Erzeugen der Abstandsmatrix durch Messen (928) des Abstands zwischen den Abfrage- und Modellknoten jeder der Kombinationen.

10. Verfahren nach Anspruch 9, wobei das Erzeugen der Abstandsmatrix durch Messen des Abstands zwischen den Abfrage- und Modellknoten jeder der Kombinationen folgendes umfasst:

Konstruieren (933) einer ersten Abstandsmatrix der Absolutwerte der Differenzen zwischen Attributvektoren der Abfrage- und Modellknoten zur Berechnung des Abstands zwischen den Abfrage- und Modellknoten jeder der Kombinationen;
Konstruieren (934) von Vektorräumen mit durch die relationalen Attribute der Knoten parameterisierten Achsen;
Ausdrücken (936) der Abfrageknoten und der Modellknoten als Punktegruppen in den entsprechenden Vektorräumen;
Festlegen (938) eines imaginären Knotens in jedem der Vektorräume, wobei der imaginäre Knoten mit einheitlichem Abstand zu allen Punkten beabstandet angeordnet ist;
Konstruieren (940) einer zweiten Abstandsmatrix durch Berechnen der euklidischen Abstände zwischen den Punkten in den Vektorräumen; und
Summieren (924) der ersten und zweiten Abstandsmatrizen, um die Abstandsmatrix zu erzeugen.

11. Verfahren nach Anspruch 8, 9 oder 10, wobei das Messen der Übereinstimmung zwischen dem Abfragegraphen und dem Modellgraphen folgendes umfasst:

Berechnen (930) der erforderlichen Arbeitsmenge, um die Gewichtung basierend auf der Abstandsmatrix von den Abfrageknoten zu den Modellknoten zu bewegen und den Gewichten der Abfrageknoten des Abfragegraphen und den Modellknoten der Modellgraphen; und
Berechnen (932) als die Übereinstimmung einer Arbeitsmenge insgesamt für alle Knoten.

12. Computerlesbares Medium, auf dem ein Computerprogramm für das Verfahren nach einem der Ansprüche 5 bis 11 ausgeführt ist.

13. Vorrichtung zum Suchen in einer Datenbank dreidimensionaler (3D) Grafikmodelle, die durch das Verfahren nach einem der Ansprüche 1 bis 4 beschrieben sind, wobei die Vorrichtung folgendes umfasst:

eine Abfrageeingabeeinheit (700), die zum Empfangen einer Abfrage angeordnet ist, die ein 3D-Grafikmodell ist;
eine Modell-/Formendeskriptor-Umwandlungseinheit (710), die so angeordnet ist, dass sie das als die Abfrage empfangene 3D-Grafikmodell in einen perzeptuellen 3D-Deskriptor in Form des zugeordneten relationalen Graphen umwandelt, der die Knoten und die Kanten umfasst, wobei die Knoten jeweils durch ein Ellipsoid dargestellt sind, das parameterisiert ist durch ein Volumen, eine Konvexität und Exzentrizitäten; und
eine Anpassungseinheit (720), die so angeordnet ist, dass sie den perzeptuellen 3D-Formendeskriptor mit jedem der perzeptuellen 3D-Formendeskriptoren der in der Datenbank gespeicherten 3D-Grafikmodelle vergleicht, um die Modelle abzurufen, die dem perzeptuellen 3D-Formendeskriptor ähnlich sind; und
eine Modellausgabeeinheit (730), die so angeordnet ist, dass sie das abgerufene Modell ausgibt.

14. Vorrichtung nach Anspruch 13, wobei die Abfrageeingabeeinheit (700) es einem Benutzer ermöglicht, das 3D-Grafikmodell durch ein interaktives Tool zu gestalten und einzugeben.

15. Vorrichtung nach Anspruch 13 oder 14, wobei die Modell-/Formendeskriptor-Umwandlungseinheit (710) einen Formeditor umfasst, der es einem Benutzer ermöglicht, den perzeptuellen 3D-Formendeskriptor zu bearbeiten.

16. Vorrichtung nach Anspruch 13, 14 oder 15, wobei die Anpassungseinheit (700) folgendes umfasst:

einen Gewichtungskonverter, der so angeordnet ist, dass er die Gewichtungen der Knoten als Gewichtungen definiert; und

eine Modellsucheinrichtung, die so angeordnet ist, dass sie den perzeptuellen 3D-Formendeskriptor mit jedem der perzeptuellen 3D-Formendeskriptoren der in der Datenbank gespeicherten 3D-Grafikmodelle vergleicht unter Verwendung einer Double Earth Mover's Distance-Methode für den Abruf der Modelle aus der Datenbank, die dem perzeptuellen 3D-Formendeskriptor ähnlich sind;

wobei die Double Earth Mover's Distance-Methode folgendes umfasst:

Erzeugen einer Abstandsmatrix zwischen Abfrageknoten eines Abfragegraphen und Modellknoten eines Modellgraphen; und

Messen der Übereinstimmung zwischen dem Abfragegraphen und dem Modellgraphen durch Berechnen der erforderlichen Arbeitsmenge, um den Abfragegraphen auf der Basis der Abstandsmatrix in den Modellgraphen umzuwandeln.

17. Vorrichtung nach Anspruch 16, wobei das Erzeugen de Abstandsmatrix folgendes umfasst:

Extrahieren der Abfrageknoten des Abfragegraphen des perzeptuellen 3D-Formendeskriptors und der Modellknoten des Modellgraphen jedes der perzeptuellen 3D-Formendeskriptoren der in der Datenbank gespeicherten 3D-Grafikmodelle, um zu vergleichende Kombinationen der miteinander zu vergleichenden Abfrage- und Modellknoten festzulegen; und

Konstruieren einer ersten Abstandsmatrix der Absolutwerte der Differenzen zwischen Attributvektoren der Abfrage- und Modellknoten zur Berechnung des Abstands zwischen den Abfrage- und Modellknoten jeder der Kombinationen;

Konstruieren von Vektorräumen mit durch die relationalen Attribute der Knoten parameterisierten Achsen;

Ausdrücken der Abfrageknoten und der Modellknoten als Punktegruppen in den entsprechenden Vektorräumen;

Festlegen eines imaginären Knotens in jedem der Vektorräume, wobei der imaginäre Knoten mit einheitlichem Abstand zu allen Punkten beabstandet angeordnet ist;

Konstruieren einer zweiten Abstandsmatrix durch Berechnen der euklidischen Abstände zwischen den Punkten in den Vektorräumen; und

Kombinieren der ersten und zweiten Abstandsmatrizen, um die Abstandsmatrix zu erzeugen; und wobei das Messen der Übereinstimmung zwischen dem Abfragegraphen und dem Modellgraphen folgendes umfasst:

Berechnen der erforderlichen Arbeitsmenge, um den Abfragegraphen in den Modellgraphen umzuwandeln für jeden der Knoten auf der Basis der Abstandsmatrix und den Gewichtungen der Abfrageknoten des Abfragegraphen und der Modellknoten der Modellgraphen; und

Berechnen als die Übereinstimmung einer Arbeitsmenge insgesamt für alle Knoten.

## Revendications

1. Procédé de description perceptuelle de forme tridimensionnelle (3D), le procédé comprenant l'étape consistant à :

générer (400) des noeuds, chaque noeud représentant un ellipsoïde, qui correspondent respectivement à des parties d'une représentation d'un modèle de forme 3D, les noeuds comprenant des attributs unaires des parties ; l'ellipsoïde étant paramétré par un volume, une convexité et des excentricités ;

comprenant en outre les étapes consistant à générer (410) des bords qui incluent des attributs relationnels entre les noeuds ; et

générer (420) un graphique relationnel avec attributs du modèle de forme 3D qui comprend les noeuds et les bords ;

caractérisé en ce que les attributs unaires de chacun des noeuds comprennent des variances qui correspondent aux degrés de distribution de voxels approchés par l'ellipsoïde sur des axes principaux 3D, à l'origine de l'ellipsoïde et à la transformation du noeud dans un système de coordonnées orienté objet.

2. Procédé selon la revendication 1, les attributs relationnels comprenant au moins la distance entre les centres des ellipsoïdes, l'angle entre les premiers axes principaux des ellipsoïdes, et l'angle entre les seconds axes principaux des ellipsoïdes.

3. Procédé selon l'une quelconque des revendications précédentes, les attributs unaires des noeuds étant quantifiés par un nombre prédéterminé de bits.

4. Support lisible par ordinateur stockant un descripteur perceptuel de forme tridimensionnelle (3D) formé par le procédé selon l'une quelconque des revendications 1 à 3.

5. Procédé de recherche dans une base de données de modèles graphiques tridimensionnels (3D) décrits par le procédé selon l'une quelconque des revendications 1 à 4, le procédé comprenant les étapes consistant à :

   recevoir un modèle graphique 3D de requête ;
   transformer (820) le modèle graphique 3D reçu en un descripteur perceptuel de forme 3D sous la forme du graphique relationnel avec attributs comprenant les noeuds et les bords, les noeuds étant chacun représenté par un ellipsoïde paramétré par un volume, une convexité et des excentricités ; et
   comparer (850) le descripteur perceptuel de forme 3D à chacun des descripteurs perceptuels de forme 3D des modèles graphiques 3D mémorisés dans la base de données pour récupérer les modèles graphiques 3D qui sont similaires au descripteur perceptuel de forme 3D.

6. Procédé selon la revendication 5, la réception du modèle graphique 3D de requête comprenant l'étape selon laquelle un utilisateur conçoit et entre (810) un modèle graphique 3D au moyen d'un outil interactif.

7. Procédé selon la revendication 5 ou 6, la transformation (820) des modèles graphiques 3D reçus dans le descripteur perceptuel de forme 3D comprenant l'étape selon laquelle un utilisateur modifie le descripteur de forme 3D transformé.

8. Procédé selon l'une quelconque des revendications 5 à 7, la comparaison du descripteur perceptuel de forme 3D à chacun des descripteurs perceptuels de forme 3D des modèles graphiques 3D pour récupérer le modèle graphique 3D comprenant les étapes consistant à :

   définir les volumes (910) des noeuds en tant que poids ; et
   comparer (920) le descripteur perceptuel de forme 3D transformé à chacun des descripteurs perceptuels de forme 3D des modèles graphiques 3D mémorisés dans la base de données à l'aide d'une méthode de la double distance du cantonnier (« earth mover's distance ») pour récupérer les modèles graphiques 3D similaires au descripteur perceptuel de forme 3D,
   la méthode de la double distance du cantonnier comprenant les étapes consistant à :

      générer (922) une matrice de distance entre les noeuds de requête d'un graphique de requête et les noeuds de modèle d'un graphique de modèle ; et
      calculer (924) la similarité entre le graphique de requête et le graphique de modèle en calculant la quantité de travail nécessaire pour déplacer le poids des noeuds de requête aux noeuds de modèle en fonction de la matrice de distance.

9. Procédé selon la revendication 8, la génération de la matrice de distance comprenant les étapes consistant à :

   extraire (926) les noeuds de requête du graphique de requête du descripteur perceptuel de forme 3D et les noeuds de modèle du graphique de modèle de chacun des modèles graphiques 3D mémorisés dans la base de données et définir des combinaisons des noeuds de requête et de modèle à comparer les uns aux autres ; et
   générer la matrice de distance en mesurant (928) la distance entre les noeuds de requête et de modèle de chacune des combinaisons.

10. Procédé selon la revendication 9, la génération de la matrice de distance en mesurant la distance entre les noeuds de requête et de modèle de chacune des combinaisons comprenant les étapes consistant à :

construire (933) une première matrice de distance des valeurs absolues des différences entre les vecteurs d'attribut des noeuds de requête et de modèle pour calculer la distance entre les noeuds de requête et de modèle de chacune des combinaisons ;

construire (934) des espaces vectoriels avec axes paramétrés par attributs relationnels des noeuds ;

exprimer (936) les noeuds de requête et les noeuds de modèle sous forme d'ensembles de points dans les espaces vectoriels respectifs ;

définir (938) un noeud imaginaire dans chacun des espaces vectoriels, le noeud imaginaire étant espacé d'une distance égale de tous les points ;

construire (940) une seconde matrice de distance en calculant les distances euclidiennes entre les points dans les espaces vectoriels ; et

additionner les première et seconde matrices de distance pour générer la matrice de distance.

**11.** Procédé selon la revendication 8, 9 ou 10, la mesure de la similarité entre le graphique de requête et le graphique de modèle comprenant les étapes consistant à :

calculer (930) la quantité de travail nécessaire pour déplacer le poids des noeuds de requête aux noeuds de modèle en fonction de la matrice de distance et des poids des noeuds de requête du graphique de requête et des noeuds de modèle des graphiques de modèle ; et

calculer (932) en tant que similarité un volume total de travail pour tous les noeuds.

**12.** Support lisible par ordinateur comprenant un programme informatique pour le procédé selon l'une quelconque des revendications 5 à 11.

**13.** Appareil permettant de rechercher dans une base de données de modèles graphiques tridimensionnels (3D) décrits par le procédé selon l'une quelconque des revendications 1 à 4, l'appareil comprenant :

une unité (700) d'entrée de requête conçue pour recevoir une requête qui est un modèle graphique 3D ;

une unité (710) de transformation de descripteur de modèle/forme conçue pour transformer le modèle graphique 3D reçu en tant que requête dans un descripteur perceptuel de forme 3D sous la forme du graphique relationnel avec attributs comprenant les noeuds et les bords, les noeuds étant chacun représentés par un ellipsoïde paramétré par un volume, une convexité et des excentricités ;

une unité (720) de mise en correspondance conçue pour comparer le descripteur perceptuel de forme 3D à chacun des descripteurs perceptuels de forme 3D des modèles graphiques 3D mémorisés dans la base de données pour récupérer les modèles qui sont similaires au descripteur perceptuel de forme 3D ; et

une unité (730) de sortie de modèle conçue pour transmettre le modèle récupéré.

**14.** Appareil selon la revendication 13, l'unité (700) d'entrée de requête permettant à un utilisateur de concevoir et d'entrer le modèle graphique 3D à l'aide d'un outil interactif.

**15.** Appareil selon la revendication 13 ou 14, l'unité (710) de transformation de descripteur de modèle/forme comprenant un modificateur de forme qui permet à un utilisateur de modifier le descripteur perceptuel de forme 3D.

**16.** Appareil selon la revendication 13, 14 ou 15, l'unité (720) de mise en correspondance comprenant :

un convertisseur de poids conçu pour définir les poids des noeuds en tant que poids ; et

un chercheur de modèle conçu pour comparer le descripteur perceptuel de forme 3D à chacun des descripteurs perceptuels de forme 3D des modèles graphiques 3D mémorisés dans la base de données à l'aide d'un procédé de double distance du cantonnier (« earth mover's distance ») pour récupérer les modèles de la base de données qui sont similaires au descripteur perceptuel de forme 3D,

le procédé de double distance du cantonnier comprenant les étapes consistant à :

générer une matrice de distance entre les noeuds de requête d'un graphique de requête et les noeuds de modèle d'un graphique de modèle ; et

mesurer la similarité entre le graphique de requête et le graphique de modèle en calculant la quantité de travail nécessaire pour transformer le graphique de requête en graphique de modèle en fonction de la matrice de distance.

**17.** Appareil selon la revendication 16, la génération de la matrice de distance comprenant les étapes consistant à :

extraire les noeuds de requête du graphique de requête du descripteur perceptuel de forme 3D et les noeuds du modèle du graphique de modèle de chacun des descripteurs perceptuels de forme 3D des modèles graphiques 3D mémorisés dans la base de données pour définir les combinaisons des noeuds de requête et de modèle à comparer les uns aux autres ; et construire une première matrice de distance des valeurs absolues des différences entre les vecteurs d'attribut des noeuds de requête et de modèle pour calculer la distance entre les noeuds de requête et de modèle de chacune des combinaisons ;

construire des espaces vectoriels avec axes paramétrés par attributs relationnels des noeuds ;

exprimer les noeuds de requête et les noeuds de modèle sous forme d'ensembles de points dans les espaces vectoriels respectifs ;

définir un noeud imaginaire dans chacun des espaces vectoriels, le noeud imaginaire étant espacé d'une distance égale de tous les points ;

construire une seconde matrice de distance en calculant les distances euclidiennes entre les points dans les espaces vectoriels ; et

combiner les première et seconde matrices de distance pour générer la matrice de distance, et

la mesure de la similarité entre le graphique de requête et le graphique de modèle comprenant les étapes consistant à :

calculer la quantité de travail nécessaire pour transformer le graphique de requête en graphique de modèle pour chacun des noeuds en fonction de la matrice de distance et des poids des noeuds de requête du graphique de requête et des noeuds de modèle des graphiques de modèle ; et calculer en tant que similarité un volume total de travail pour tous les noeuds.

# FIG. 1

(a) 'android' MODEL

(b) SHAPE SPECTRUM OF 'android' MODEL

(c) 'crocodile' MODEL

(d) SHAPE SPECTRUM OF 'crocodile' MODEL

# FIG. 2

IDS

RDS

IMS

# FIG. 3

(a)　　　　　　　　(b)　　　　　　　　(c)

(d)　　　　　　　　(e)　　　　　　　　(f)

## FIG. 4

| GENERATE NODES WITH UNARY ATTRIBUTES | ← 400 |

↓

| GENERATE EDGES WITH RELATIONAL ATTRIBUTES | ← 410 |

↓

| GENERATE ARG | ← 420 |

## FIG. 5

angle

distance

## FIG. 6

| P3DS { | Number of bits | Mnemonics |
|---|---|---|
| NNodes | 5 | uimsbf |
| for (i=0; i<NNodes-1; i++)  {<br>    for (j=i+1 ; j<NNodes; j++) { | | |
| IsAdjacent[i][j] | 1 | bslbf |
| } | | |
| } | | |
| for (i=0; i<NNodes; i++)  { | | |
| Volume[i] | 8 | uimsbf |
| Center[i][3] | 8 | uimsbf |
| Transform[i][6] | 8 | uimsbf |
| Variance[i][3] | 8 | uimsbf |
| Convexity[i] | 8 | uimsbf |
| } | | |
| } | | |

## FIG. 7

```
        700              710                     720                         730
   QUERY         MODEL/SHAPE          MATCHING UNIT                    MODEL
   INPUT UNIT    DESCRIPTOR                          722               OUTPUT UNIT
                 TRANSFORMING           WEIGHT
                 UNIT                    CONVERTOR
                              705                   724
                 SHAPE EDITOR            MODEL
                                         SEARCHER
```

# FIG. 8

```
        ┌─────────────────────┐   ┌──────────────────────┐
   800  │ SELECT QUERY MODEL  │ 810│   USER DRAWS OBJECT  │
        │                     │   │ USING INTERACTIVE TOOL│
        └─────────────────────┘   └──────────────────────┘
                  │                          │
                  └────────────┬─────────────┘
                               │
                  ┌─────────────────────────┐
                  │   TRANSFORM MODEL INTO   │── 820
                  │      PERCEPTUAL 3D       │
                  │    SHAPE DESCRIPTOR      │
                  └─────────────────────────┘
                               │
                          ╱─────────╲   830
                    ╱──────────────────────╲        YES
                   ╱   DOES USER WANT         ╲──────────┐
                   ╲    TO EDIT ?             ╱          │
                    ╲──────────────────────╱            ▼
                          ╲─────────╱         ┌──────────────────────┐ 840
                               │   NO         │ EDIT SHAPE DESCRIPTOR │
                               │              └──────────────────────┘
                               │◄──────────────────────┘
                  ┌─────────────────────────┐
                  │     SEARCH DATABASE      │── 850
                  └─────────────────────────┘
                               │
                  ┌─────────────────────────┐
                  │   OUTPUT SIMILAR MODELS  │── 860
                  └─────────────────────────┘
```

**FIG. 9**

- MODEL A PAIR OF GRAPHS — 900
- DEFINE VOLUMES AS WEIGHTS — 910
- APPLY DOUBLE EMD FOR MATCHING — 920
- EXTRACT SIMILARITY BETWEEN TWO GRAPHS — 950

- GENERATE DISTANCE MATRIX — 922
- MEASURE SIMILARITY — 924

- SET COMBINATIONS OF NODES EXTRACTED FROM QUERY AND MODE GRAPHS — 926
- MEASURE NODE DISTANCE FOR EACH COMBINATION — 928
- CALCULATE THE AMOUNT OF WORK REQUIRED TO MOVE THE QUERY NODES TO THE MODEL NODES BASED ON DISTANCE MATRIX — 930
- MEASURE SIMILARITY BY CALCULATING A TOTAL AMOUNT OF WORK FOR ALL OF THE NODES — 932

- CONSTRUCT FIRST DISTANCE MATRIX OF THE ABSOLUTE VALUES OF DIFFERENCES BETWEEN ATTRIBUTE VECTORS OF QUERY AND MODEL MODES — 933
- CONSTRUCT VECTOR SPACES — 934
- EXPRESS GRAPHS AS SETS OF POINTS IN VECTOR SPACES — 936
- SET IMAGINARY NODES — 938
- MEASURE EUCLIDEAN DISTANCES TO CONSTRUCT SECOND DISTANCE MATRIX — 940
- COMBINING FIRST AND SECOND DISTANCE MATRICES — 942

# FIG. 10

Query

$N_q$    ???    $N_m$

0.1    0.1    0.1
0.3    0.2    0.2    0.2
0.2    0.2    0.1

0.2    0.2    0.1    0.1

0.3    0.2    0.2

0.1    0.2    0.3

# FIG. 11

|  |  | 0.2 | 0.1 | 0.1 | 0.1 | 0.2 | 0.3 |
| --- | --- | --- | --- | --- | --- | --- | --- |
| 0.2 |  | · | · | · | · | · | d |
| 0.2 |  | · | · | · | · | · | d |
| 0.1 |  | · | · | · | · | · | d |
| 0.3 |  | · | · | · | · | 0 | d |
| 0.2 |  | d | d | d | d | d | 0 |

## FIG. 12

(a) SKETCHED QUERY     (b) 1$^{ST}$ RANKED MODEL     (c) ARG FORM OF (b)

# FIG. 13

(a) 'android' MODEL

(b) 'crocodile' MODEL

(c) 'hilo' MODEL

(b) 'dinopet' MODEL

(e) 'p51_mustang' MODEL

(f) 'triceratops' MODEL

## FIG. 14

(a)  (b)  (c)

## FIG. 15

(a)  (b)  (c)

(d)  (e)  (f)

# FIG. 16

| Category | | P3DS | | Shape3D | |
|---|---|---|---|---|---|
| | | BEP | ANMRR | BEP | ANMRR |
| *Aircraft* / multi_fuselages / 3_bodies | 30 | 0.63667 | 0.27326 | 0.32111 | 0.51349 |
| *Animal* / arthropod / with_wings / bee | 30 | 1.00000 | 0.00000 | 0.55556 | 0.31395 |
| *Animal* / humanoid / sitting | 60 | 0.80972 | 0.17468 | 0.55556 | 0.35739 |
| *Automobile* / tank / equipvaried | 30 | 1.00000 | 0.00007 | 0.53222 | 0.32496 |
| *Furniture* / chair / 4_legged | 30 | 0.58556 | 0.32306 | 0.34333 | 0.57811 |
| *Furniture* / chair / with_a_post | 30 | 0.68333 | 0.24401 | 0.25000 | 0.60770 |
| *Letter* / O | 15 | 0.58667 | 0.29990 | 0.32000 | 0.51549 |
| *Plant* / flower / 20_petaled | 30 | 0.66111 | 0.23978 | 0.49333 | 0.38556 |
| *Ship* / single_mast / romanship | 30 | 0.93444 | 0.05263 | 0.33778 | 0.49105 |
| *Simplex* / cellular_phone | 51 | 0.85659 | 0.11556 | 0.36332 | 0.47692 |
| **Total** | 336 | 0.79197 | 0.16327 | 0.42162 | 0.44626 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **BISCHOFF ; KOBBELT.** Streaming 3d geometry data over lossy communication channels. *IEEE International Conference on Multimedia and Expo,* 2002, 361-364
- **PETRAKIS.** Content-based retrieval of medical images. *International Journal of Computer Based Research,* vol. 11 (2), 171-182
- **ZAHARIA ; PRETEUX.** 3d shape retrieval within the MPEG-7 framework. *Nonlinear Image Processing and Pattern Analysis XIII, Proceedings of SPIE,* 2001, vol. 4304, 133-145
- Perceptual descriptor for 3D shape indexing and retrieval. **DUCK HOON KIM et al.** 62. MPEG Meeting October 2002, Shanghai. Motion Picture Expert Group ISO/IEC JTC/SC29/WG11, M8980, 15 October 2002